# EUROPÄISCHE PATENTSCHRIFT

(11) **EP 1 233 227 B1**
(45) Veröffentlichungstag und Bekanntmachung des Hinweises auf die Patenterteilung: **27.04.2005**
(21) Anmeldenummer: 02002664.7
(22) Anmeldetag: 06.02.2002
(51) Int. Cl.: F16L 37/12

(54) **Steckverbindung für Strömungsmittelleitungen**
Plug connection for fluid pipes
Raccord enfichable pour tuyaux pour fluide

(30) Priorität: 15.02.2001 DE 20102811 U
(43) Veröffentlichungstag der Anmeldung: 21.08.2002
(73) Patentinhaber: Voss Automotive GmbH, 51688 Wipperfürth (DE)
(72) Erfinder: Bilstein, Rozália, 51688 Wipperfürth (DE); Hagen, Harald, 51688 Wipperfürth (DE)
(74) Vertreter: Patentanwälte Dr. Solf & Zapf

(56) Entgegenhaltungen:
- EP-A- 0 385 052
- US-A- 3 930 674
- US-A- 5 513 882

## Beschreibung

Die vorliegende Erfindung betrifft eine Steckverbindung für Strömungsmittel-Leitungen, gemäß dem Oberbegriff des Patentanspruchs 1.

Eine derartige Steckverbindung ist in der EP 0 385 052 A1 beschrieben. Dabei werden zwei Kupplungsteile in ihrer zusammengesteckten Kupplungslage durch zwei im Schnitt C-förmige Halteelemente arretiert, indem die Halteelemente zwei flanschartige Ringstege der beiden Kupplungsteile axial und radial umgreifen. Dabei ist als Halteteil ein Federring vorgesehen, der die C-förmigen Halteelemente umfänglich umgreift und dadurch in ihrer Arretierlage hält. Daraus resultiert eine recht umständliche Montage, weil nach dem Zusammenstecken der Kupplungsteile zunächst die separaten Halteelemente einzeln radial aufgesetzt und dann mit dem Federring gesichert werden müssen.

Eine ähnliche, aber nicht ganz gattungsgemäße Steckkupplung ist in der US-A-3 930 674 beschrieben. Hierbei ist zur Arretierung der Kupplungsteile ein einteiliges Klammerelement vorgesehen, welches zwei gegenüberliegende, im Querschnitt C-förmige Abschnitte aufweist, die miteinander über einen Federsteg verbunden sind. Dieses Klammerelement muß daher von der Seite her radial über Ringstege der Kupplungsteile aufgeschoben werden. Dies hat zur Folge, dass die Arretierabschnitte in Umfangsrichtung gesehen nur recht kurz ausgebildet sein können.

Weitere Arten von Steckverbindungen sind in vielen verschiedenen Ausführungen bekannt. Beispielsweise beschreibt die EP 0 881 421 A2 eine Ausführung, bei der die Verriegelungseinrichtung ein inneres, innerhalb der Aufnahmeöffnung des Muffenteils gelagertes, radial elastisch verformbares Halteelement aufweist, welches zum Arretieren des Steckerteils im eingesteckten Zustand eine Raststufe formschlüssig rastend hintergreift. Eine solche innere Anordnung des Halteelementes macht für ein Lösen der Steckverbindung spezielle Maßnahmen erforderlich, weil das Halteelement von außen nicht unmittelbar erreichbar ist.

Die EP 0 691 501 A1 beschreibt einen weiteren Steckverbinder, bei dem das Steckerteil als Verriegelungsmittel mindestens zwei äußere federelastische Rastarme aufweist, die sich parallel zur Steckachse jeweils mit Abstand zum Steckerschaft in Richtung seines freien Endes erstrecken und im eingesteckten Zustand mit Rastnocken eine Raststufe des Muffenteils arretierend hintergreifen. Dabei sind die Rastarme zum Lösen des Steckerteils mittels eines am Steckerteil beweglich angeordneten Löseelementes spreizbar. Bei dieser Ausführung ist das Löseelement in Richtung der Steckachse verschiebbar an dem Steckerteil gehaltert und wirkt mit den Rastarmen derart zusammen, dass die Rastarme durch ein Verschieben des Löseelementes in Herausziehrichtung des Steckerteils gespreizt werden.

Ein ähnlicher Steckverbinder ist aus der DE 42 14 105 A1 bekannt. Hierbei ist aber als Löseelement eine U-Spreizklammer vorgesehen, die im Bereich eines zwischen den Rastarmen und dem Steckerschaft gebildeten Spaltes senkrecht zur Steckachse verschiebbar geführt ist, so dass über Schrägflächen ein Spreizen der Rastarme möglich ist. Dabei ist allerdings nachteilig, dass die bügelartige Spreizklammer seitlich recht weit über die Außenkontur des Steckerteils hinausragt, so dass sie im praktischen Einsatz beschädigt oder gar abgebrochen oder womöglich ungewollt betätigt werden könnte, was dann eventuell ein ungewolltes Lösen der Steckverbindung und damit auch nachteilige Undichtigkeiten zur Folge hätte.

Der vorliegenden Erfindung liegt die Aufgabe zugrunde, eine Steckverbindung der eingangs genannten Art zu schaffen, die sich durch konstruktiv und herstellungsmäßig einfache und preiswerte Ausgestaltung, einfache Handhabung sowie gute und störungsfreie Funktion auszeichnet. Dabei soll die Steckverbindung insbesondere durch hohe Haltekräfte auch für höhere Systemdrücke geeignet sein.

Erfindungsgemäß wird dies durch die Merkmale des Patentanspruchs 1 erreicht. Vorteilhafte Ausgestaltungen der Erfindung sind Gegenstand der abhängigen Ansprüche.

Die Verriegelungseinrichtung weist zwei im Axial-Schnitt gesehen C-förmige Halteelemente auf, die mit radialen Haltestegen zum Arretieren zwei äußere, radiale, flanschartige, im eingesteckten Zustand benachbarte Ringstege der beiden Kupplungsteile auf diametral beidseitig der Steckachse gegenüberliegenden Seiten axial und radial umgreifen. Gemäß der Erfindung sind die Halteelemente in einem Käfigelement derart unverlierbar gehalten und geführt, dass sie in radialer Richtung - bezogen auf die Steckachse - zwischen einer Vormontageposition und einer Arretierposition (und umgekehrt) bewegbar sind. Dabei ist das Käfigelement zusammen mit den darin gehaltenen Halteelementen mit einem der beiden Kupplungsteile derart vormontiert verbunden bzw. verbindbar, dass das jeweilige Kupplungsteil in der Vormontageposition der Halteelemente mit dem jeweils anderen Kupplungsteil steckverbindbar und nachfolgend die Kupplungsteile durch einfaches Überführen der Halteelemente in ihre Arretierposition gegen Lösen arretierbar sind. In bevorzugter Ausgestaltung ist dabei vorgesehen, dass die Halteelemente derart kreissektorförmig ausgebildet sind, dass sie die Ringstege der Kupplungsteile in Umfangsrichtung jeweils über einen Umgreifungswinkel umgreifen, der im Bereich von etwa 45° bis maximal 180° liegt und insbesondere etwa 100° bis 140° beträgt. Bei einem bevorzugten Ausführungsbeispiel beträgt der Umgreifungswinkel jedes der beiden Halteelemente etwa 120°, was zu einem Gesamt-Umgreifungswinkel von ca. 240° führt. Durch die erfindungsgemäße Ausgestaltung werden hohe Haltekräfte gewährleistet, und zwar vorteilhafterweise auch bei Verwendung von Kunststoffmaterial für die Halteelemente. Durch die diametral gegenüberliegende Anordnung der beiden Halteelemente werden zudem Kippmomente zwischen den Kupplungsteilen vermieden. Die Steckverbindung ist dadurch auch für relativ hohen Druck von z.B. bis 30 bar sowie auch für große Nennweiten geeignet. Anhand eines in der Zeichnung veranschaulichten, bevorzugten Ausführungsbeispiels soll die Erfindung genauer erläutert werden.

Dabei zeigen:
- Fig. 1: eine Perspektivansicht einer erfindungsgemäßen Steckverbindung in der Vormontageposition der Halteelemente,
- Fig. 2: eine Perspektivansicht analog zu Fig. 1, jedoch in der Arretierposition,
- Fig. 3: eine Seitenansicht in Pfeilrichtung III gemäß Fig. 1 in der Vormontageposition,
- Fig. 4: einen Querschnitt in der zur Steckachse senkrechten Schnittebene IV-IV gemäß Fig. 3,
- Fig. 5: eine Seitenansicht in Pfeilrichtung V gemäß Fig. 2 in der Arretierposition,
- Fig. 6: einen Längsschnitt durch die Steckverbindung in der Arretierposition in der Ebene VI-VI gemäß Fig. 5 bzw. Fig. 8,
- Fig. 7: einen Querschnitt in der Arretierposition in der Ebene VII-VII gemäß Fig. 6,
- Fig. 8: eine axiale Draufsicht in Pfeilrichtung VIII gemäß Fig. 6,
- Fig. 9: einen Axialschnitt in der Ebene IX-IX gemäß Fig. 6,
- Fig. 10: eine perspektivische Explosionsansicht der wesentlichen Bestandteile der Verriegelungseinrichtung und
- Fig. 11: eine halbgeschnittene Perspektivansicht der Verriegelungseinrichtung in einem von den Kupplungsteilen getrennten Zustand sowie in der Arretierposition.

In den verschiedenen Figuren der Zeichnungen sind gleiche Teile stets mit den gleichen Bezugszeichen versehen und brauchen daher in Regel jeweils nur einmal beschrieben zu werden.

Eine erfindungsgemäße Steckverbindung besteht aus zwei Kupplungsteilen, und zwar aus einem Muffenteil 2 und einem Steckerteil 4. Das Steckerteil 4 ist mit einem Steckerschaft 6 dichtend in eine Aufnahmeöffnung 8 des Muffenteils 2 einsteckbar und im eingesteckten Zustand über eine Verriegelungseinrichtung 10 lösbar arretierbar.

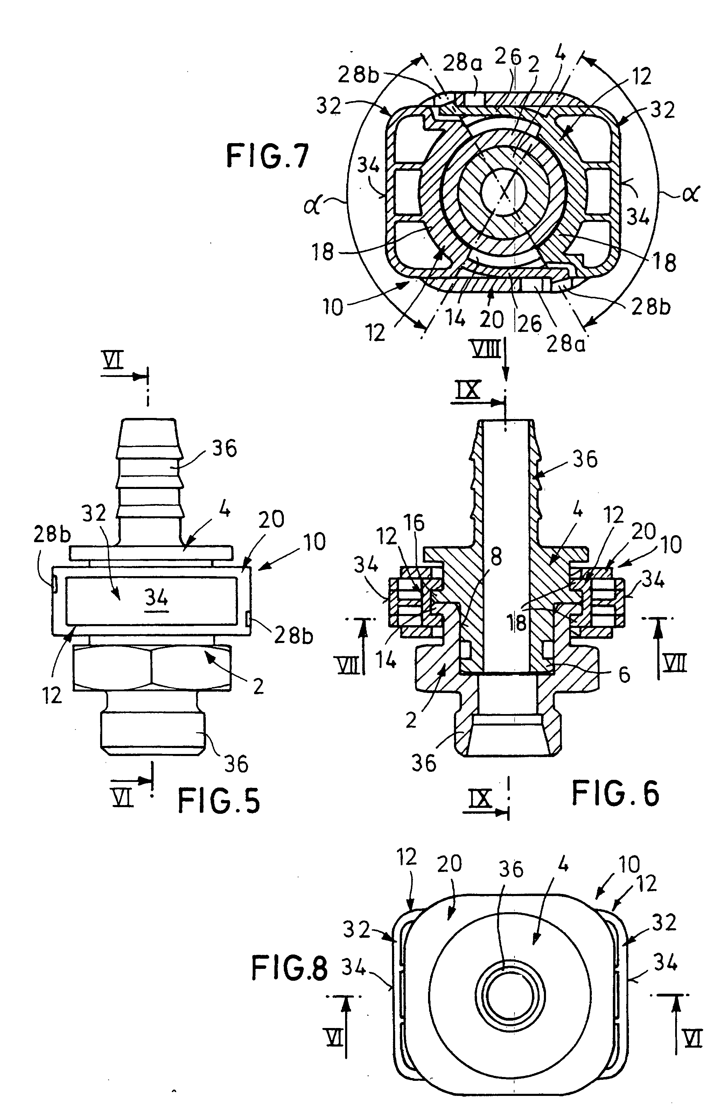

Erfindungsgemäß weist die Verriegelungseinrichtung 10 zwei Halteelemente 12 auf, die gemäß Fig. 6 im Axial-Schnitt gesehen jeweils C-förmig ausgebildet sind und zum Arretieren der beiden Kupplungsteile 2, 4 zwei an letzteren äußere, radiale, flanschartige und im eingesteckten Zustand axial benachbarte Ringstege 14 und 16 mit radialen Haltestegen 18 axial und radial umgreifen. Dabei sind die beiden Halteelemente 12 auf diametral gegenüberliegenden Seiten der Kupplungsteile 2, 4 angeordnet.

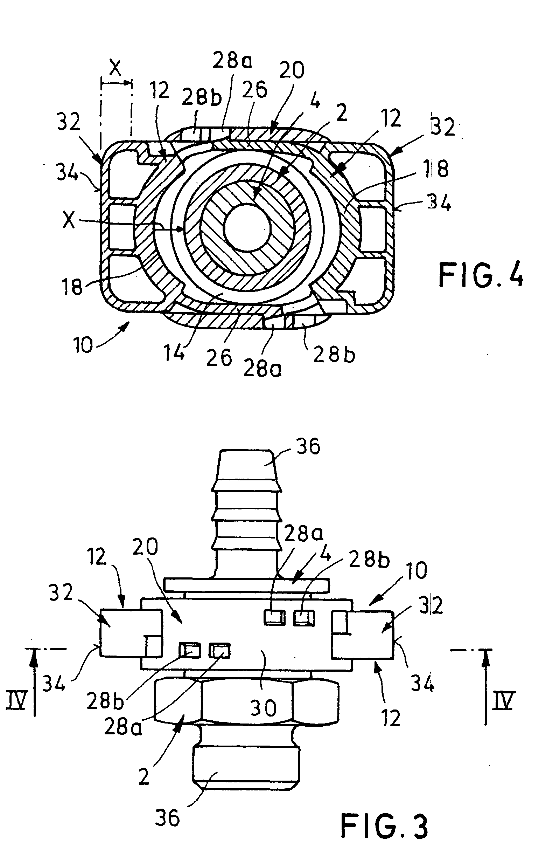

Gemäß Fig. 4, 7 und 10 sind die Halteelemente 12 jeweils derart kreissektorförmig ausgebildet, dass sie die Ringstege 14, 16 der Kupplungsteile 2, 4 in Umfangsrichtung jeweils über einen Umgreifungswinkel α - siehe insbesondere Fig. 7 - umgreifen. Dieser Umgreifungswinkel α liegt im Bereich von etwa 45° bis maximal 180°. Im dargestellten, bevorzugten Ausführungsbeispiel beträgt der Umgreifungswinkel α etwa 120°. Dies stellt einen vorteilhaften Kompromiß dar zwischen einerseits einem großen Gesamt-Umgreifungswinkel (2 · α = 240°) und andererseits einem minimalen radialen Betätigungsweg x - siehe dazu insbesondere Fig. 4 - zwischen einer zum Steckverbinden der beiden Kupplungsteile 2, 4 geeigneten Vormontageposition (Fig. 4) und der die Kupplungsteile 2, 4 gegen Lösen arretierenden Arretierposition (Fig. 7).

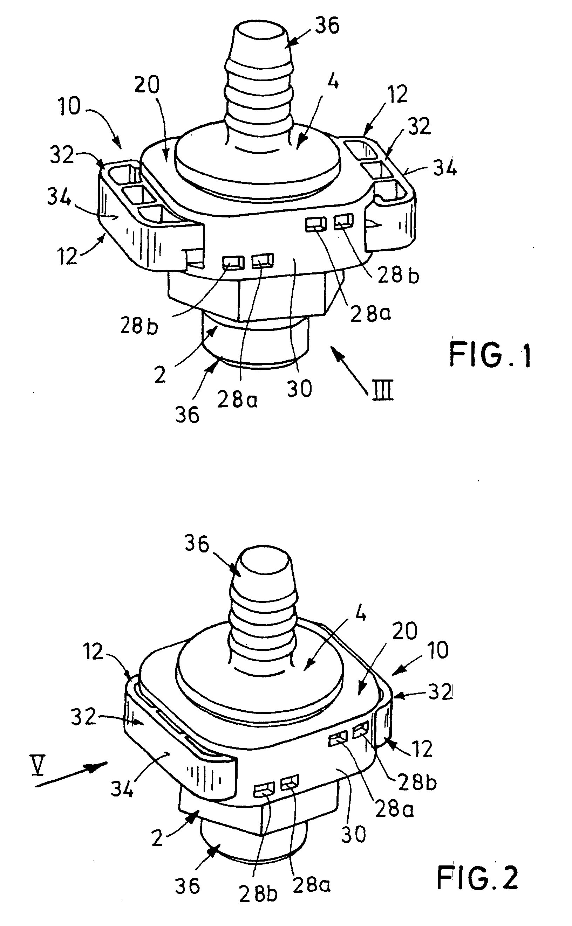

Vorteilhafterweise sind die Halteelemente 12 in einem Käfigelement 20 derart unverlierbar gehalten und geführt, dass sie in radialer Richtung zwischen der Vormontageposition (Fig. 1, 3, 4) und der Arretierposition (Fig. 2 und 6 bis 8) in beiden Richtungen bewegbar sind. Hierbei ist das Käfigelement 20 zusammen mit den darin gehaltenen und geführten Halteelementen 12 vorzugsweise mit einem der beiden Kupplungsteile 2 oder 4 derart vormontiert verbunden bzw. verbindbar, dass das jeweilige Kupplungsteil 2 oder 4 in der Vormontageposition der Halteelemente 12 mit dem jeweils anderen Kupplungsteil 4 oder 2 steckverbindbar und nachfolgend die Kupplungsteile 2, 4 durch Überführen der Halteelemente 12 radial nach innen in ihre Arretierposition gegen Lösen arretierbar sind, indem dann die bevorzugt aneinanderliegenden Ringstege 14, 16 von den Halteelementen 12 umgriffen und zusammengehalten werden.

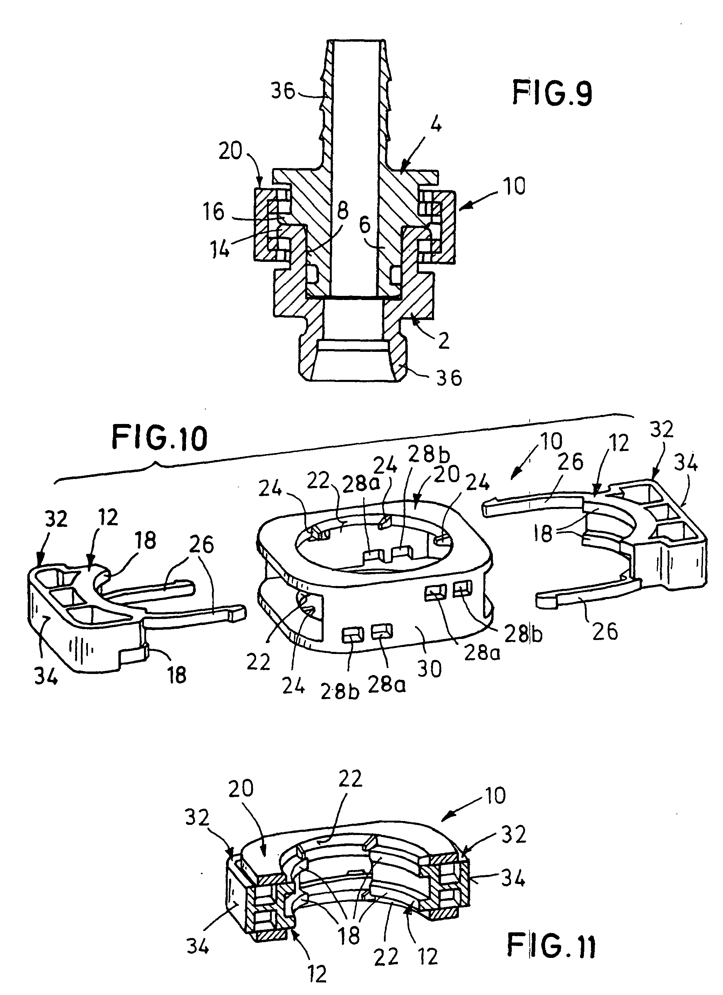

Das Käfigelement 20 weist dazu zwei in Steckrichtung der Kupplungsteile 2, 4 gegenüberliegende, insbesondere kreisförmige Stecköffnungen 22 auf (siehe dazu insbesondere Fig. 10 und 11). Zur Vormontageverbindung mit einem der Kupplungsteile 2, 4 sind beim dargestellten Beispiel am inneren Umfangsrand wenigstens einer dieser Stecköffnungen 22 Fixiermittel insbesondere in Form von radialen, elastischen Ansätzen 24 derart vorgesehen, dass das Käfigelement 20 mit der jeweiligen Stecköffnung 22 rastend über den Ringsteg 14 oder 16 des jeweiligen Kupplungsteils 2 oder 4 rastbar ist. Das Käfigelement 20 hängt dann relativ locker an dem jeweiligen Kupplungsteil 2 oder 4, und das jeweils andere Kupplungsteil 4 oder 2 braucht dann durch die andere Stecköffnung 22 nur noch eingesteckt zu werden. Schließlich werden die Halteelemente 12 radial nach innen in ihre Arretierposition bewegt.
Zweckmäßigerweise sind die Halteelemente 12 in der Vormontageposition und auch in der Arretierposition jeweils insbesondere über Rastmittel relativ zu dem Käfigelement 20 fixiert. In der dargestellten, bevorzugten Ausführungsform weist dazu jedes Halteelement 12 vorzugsweise zwei federnde, in Bewegungsrichtung x (vergleiche Fig. 4) ausgerichtete Rastarme 26 auf, die mit endseitigen Rastnasen mit einerseits die Vormontageposition und andererseits die Arretierposition definierenden Rastausnehmungen 28a, 28b in Seitenwandungen 30 des Käfigelementes 20 zusammenwirken. Wie dargestellt definieren die Rastausnehmungen 28a die Vormontageposition und die Rastausnehmungen 28b die Arretierposition.

Durch die Rastarme 26 ergibt sich für die Vormontageverbindung mit einem der Kupplungsteile 2, 4 eine vorteilhafte, aber nicht dargestellte Alternative zu den Ansätzen 24 der Stecköffnung(en) 22, und zwar können die Rastarme 26 entsprechende, z.B. als Ansätze ausgebildete Fixiermittel aufweisen, die den Ringsteg 14 bzw. 16 des jeweiligen Kupplungsteils 2 bzw. 4 übergreifen. Diese bevorzugte Variante gewährleistet einen definierten (d. h. nicht so losen) Vormontagesitz der Verriegelungseinrichtung 10 an dem jeweiligen Kupplungsteil 2 oder 4.

Es ist zweckmäßig, wenn die beiden Halteelemente 12 identisch und insbesondere als jeweils einstückige Kunststoff-Formteile ausgebildet sind. Vorzugsweise bestehen die Halteelemente 12 aus POM. Für die bevorzugt identische Ausgestaltung der Halteelemente 12 sind die beiden Rastarme 26 jedes Halteelementes 12 in zu seiner Bewegungsebene senkrechter Richtung parallel versetzt gegeneinander angeordnet. Dies gilt entsprechend auch für die jeweils zugehörigen Rastausnehmungen 28a, b.

Die Kupplungsteile 2, 4 selbst können grundsätzlich aus beliebigen Materialien bestehen, beispielsweise aus Kunststoff oder Metall. Als Kunststoffmaterial ist bevorzugt PA 66 GF 35 oder ein PA66 mit anderem Faseranteil geeignet.

Wie sich weiterhin aus der Zeichnung ergibt, weist das Käfigelement 20 bevorzugt eine im Wesentlichen quaderförmige Außenkontur mit insbesondere quadratischer Grundflächenform auf (senkrecht zur Steckachse gesehen). Dabei greifen die Halteelemente 12 schubladenartig in gegenüberliegende Seitenöffnungen des Käfigelementes 20 ein, siehe dazu insbesondere Fig. 10. Die Halteelemente 12 weisen auf ihren radial nach außen gerichteten Seiten jeweils einen Betätigungsabschnitt 32 mit einer zur Ebene der jeweiligen Seitenöffnung des Käfigelementes 20 parallelen Druckfläche 34 auf.

Jedes Halteelement 12 ragt in der Arretierposition vorzugsweise noch etwas aus dem Käfigelement 20 heraus, so dass es zum Herausziehen zwecks Überführen in die Vormontageposition zum Lösen der Steckverbindung noch ergreifbar ist. Im übrigen aber verschließt jedes Halteelement 12 in der Arretierposition weitgehend die jeweilige Seitenöffnung des Käfigelementes 20 (siehe insbesondere Fig. 2). Es kann auch vorteilhaft sein, wenn die Halteelemente 12 in ihrer Arretierposition mit der äußeren Druckfläche 34 jeweils mit dem Käfigelement 20 etwa bündig in der Ebene der Seitenöffnung abschließen, denn dadurch ist eine einfache optische Steckkontrolle gewährleistet. Zum Lösen der Steckerverbindung sind dann z.B. im Käfigelement 20 Aussparungen zum Ansatz eines geeigneten Lösewerkzeugs zum Verschieben der Halteelemente 12 vorzusehen.

Bei der beschriebenen, bevorzugten Ausgestaltung wird das Käfigelement 20 vorteilhafterweise im arretierten Zustand der Kupplungsteile 2, 4 nicht mit Haltekräften beaufschlagt, sondern der Kraftfluß läuft nur direkt über die Halteelemente 12. Das Käfigelement 20 kann deshalb als einfaches Kunststoffteil ausgebildet sein.

Jedes Kupplungsteil 2, 4 weist ein im Grunde beliebig ausgestaltetes Anschlußelement 36 für nicht dargestellte Strömungsmittel-Leitungen auf. Zumindest eines der beiden Kupplungsteile 2, 4 kann auch unmittelbar von einem Bestandteil eines Druckaggregates gebildet sein, beispielsweise von einem Gehäuseteil eines Ventils oder von einem Tankanschluß oder dergleichen.

## Patentansprüche

1. Steckverbindung für Strömungsmittel-Leitungen, bestehend aus zwei Kupplungsteilen, und zwar aus einem Muffenteil (2) und einem Steckerteil (4), wobei das Steckerteil (4) mit einem Steckerschaft (6) dichtend in eine Aufnahmeöffnung (8) des Muffenteils (2) einsteckbar und im eingesteckten Zustand über eine Verriegelungseinrichtung (10) lösbar antierbar ist, wobei die Verriegelungseinrichtung (10) zwei im Schnitt C-förmige Haftelemente (12) und ein diese haltendes Halteteil aufweist, wobei die Halteelemente (12) zum Arretieren zwei äußere, radiale, flanschartige, im eingesteckten Zustand benachbarte Ringstege (14, 16) der beiden Kupplungsteile (2, 4) auf diametral gegenüberliegenden Seiten axial und radial umgreifen,
**dadurch gekennzeichnet, dass** das Halteteil als ein Käfigelement (20) ausgebildet ist, in dem die Halteelemente (12) derart unverlierbar gehalten und geführt sind, dass sie in dem Käfigelement (20) in radialer Richtung zwischen einer Vormontageposition und einer Arretierposition bewegbar sind.

2. Steckverbindung nach Anspruch 1,
**dadurch gekennzeichnet, dass** die Halteelemente (12) derart kreissektorförmig ausgebildet sind, dass sie die Ringstege (14, 16) der Kupplungsteile (2, 4) in Umfangsrichtung jeweils über einen Umgreifungswinkel (α) umgreifen, der im Bereich von etwa 45° bis maximal 180° liegt und insbesondere etwa 100° bis 140° beträgt.

3. Steckverbindung nach Anspruch 1 oder 2,
**dadurch gekennzeichnet, dass** das Käfigelement (20) mit den Halteelementen (12) mit einem der beiden Kupplungsteile (2 oder 4) derart vormontiert verbunden oder verbindbar ist, dass das jeweilige Kupplungsteil (2 oder 4) in der Vormontageposition der Halteelemente (12) mit dem jeweils anderen Kupplungsteil (4 oder 2) steckverbindbar und nachfolgend die Kupplungsteile (2, 4) durch Überführen der Halteelemente (12) in ihre Arretierposition gegen Lösen arretierbar sind.

4. Steckverbindung nach Anspruch 3,
**dadurch gekennzeichnet, dass** das Käfigelement (20) zwei in Steckrichtung der Kupplungsteile (2, 4) gegenüberliegende Stecköffnungen (22) aufweist und insbesondere am inneren Umfangsrad wenigstens einer dieser Stecköffnungen (22) Fixiermittel, bevorzugt in Form von radialen Ansätzen (24) derart angeordnet sind, dass das Käfigelement (20) zur Vormontage mit der jeweiligen Stecköffnung (22) rastend über den Ringsteg (14, 16) des jeweiligen Kupplungsteils (2, 4) aufsetzbar ist.

5. Steckverbindung nach einem der Ansprüche 1 bis 4,
**dadurch gekennzeichnet, dass** die Halteelemente (12) in der Vormontageposition und der Arretierposition jeweils insbesondere über Rastmittel relativ zu dem Käfigelement (20) fixiert sind.

6. Steckverbindung nach Anspruch 5,
**dadurch gekennzeichnet, dass** jedes Halteelement (12) vorzugsweise zwei federnde Rastarme (26) aufweist, die mit einerseits die Vormontageposition und andererseits die Arretierposition definierenden Rastausnehmungen (28a, 28b) des Käfigelementes (20) zusammenwirken, wobei insbesondere an den Rastarmen (26) Fixiermittel zur Vormontageverbindung der Verriegelungseinrichtung (10) mit einem der Kupplungsteile (2 oder 4) vorgesehen sind.

7. Steckverbindung nach einem der Ansprüche 1 bis 6,
**dadurch gekennzeichnet, dass** die beiden Halteelemente (12) identisch und insbesondere als jeweils einstückige Formteile ausgebildet sind.

8. Steckverbindung nach Anspruch 6 oder 7,
**dadurch gekennzeichnet, dass** die beiden Rastarme (26) jedes Halteelementes (12) in zu seiner Bewegungsebene senkrechter Richtung parallel versetzt zueinander angeordnet sind.

9. Steckverbindung nach einem der Ansprüche 1 bis 8,
**dadurch gekennzeichnet, dass** die Kupplungsteile (2,4) aus Kunststoff und/oder Metall bestehen.

10. Steckverbindung nach einem der Ansprüche 1 bis 9,
**dadurch gekennzeichnet, dass** das Käfigelement (20) eine im Wesentlichen quaderförmige Außenkontur mit insbesondere quadratischer Grundflächenform aufweist, wobei die Halteelemente (12) schubladenartig in gegenüberliegende Seitenöffnungen eingreifen, und wobei die Halteelemente (12) auf ihren radial nach außen weisenden Seiten jeweils einen Betätigungsabschnitt (32) mit einer zur Ebene der jeweiligen Seitenöffnung des Käfigelementes (20) parallelen Druckfläche (34) aufweisen.

11. Steckverbindung nach Anspruch 10,
**dadurch gekennzeichnet, dass** die Halteelemente (12) in der Arretierposition mit ihren Druckflächen (34) etwa bündig in der Ebene der Seitenöffnungen des Käfigelementes (20) abschließen.

## Claims

1. Plug-type connector for fluid lines composed of two coupling parts, specifically of a sleeve part (2) and a plug part (4), wherein the plug part (4) can be plugged with a plug stem (6) into a receptacle opening (8) of the sleeve part (2) in a seal-forming fashion and can be releasably locked in the plugged-in state by means of a locking device (10), wherein the locking device (10) has two securing elements (12) which are C-shaped in section and a securing part which secures the latter, wherein, for the purpose of locking, the securing elements (12) engage axially and radially around two outer, radial flange-like annular webs (14, 16), which are adjacent in the plugged-in state of the two coupling parts (2, 4) on diametrically opposite sides, **characterized in that** the securing part is embodied as a cage element (20) in which the securing elements (12) are captively secured and guided in such a way that they can be moved in the cage element (20) in a radial direction between a premounting position and a locking position.

2. Plug-type connector according to Claim 1, **characterized in that** the securing elements (12) are embodied in the form of a circular sector in such a way that they engage around the annular webs (14, 16) of the coupling parts (2, 4) in the circumferential direction, in each case over an engagement angle (∝) which is in the region from approximately 45° to at maximum 180° and in particular approximately 100° to 140°.

3. Plug-type connector according to Claim 1 or 2, **characterized in that** the cage element (20) is connected or can be connected to the securing elements (12) by one of the two coupling elements (2 or 4) in a premounted fashion such that in the premounting position of the securing elements (12) the respective coupling part (2 or 4) can be connected in a plugged fashion to the respective other coupling part (4 or 2) and by moving the securing elements (12) into their locking position it is subsequently possible to lock the coupling parts (2, 4) against release.

4. Plug-type connector according to Claim 3, **characterized in that** the cage element (20) has two plugging openings (22) which lie opposite in the plugging direction of the coupling parts (2, 4), and locking means, in the form of radial projections (24) are arranged in particular on the internal circumferential wheel of at least one of these plugging openings (22), in such a way that, for premounting purposes, the cage element (20) can be fitted with the respective plugging opening (22) over the annular web (14, 16) of the respective coupling part (2, 4) in a latching fashion.

5. Plug-type connector according to one of Claims 1 to 4, **characterized in that**, in the premounting position and the locking position, the securing elements (12) are respectively locked in relation to the cage element (20), in particular using latching means.

6. Plug-type connector according to Claim 5, **characterized in that** each securing element (12) preferably has two sprung latching arms (26) which interact with latching recesses (28a, 28b) of the cage element (20) which define the premounting position on the one hand and the locking position on the other, wherein locking means for forming a premounting connection of the locking device (10) to one of the coupling parts (2 or 4) are provided in particular on the latching arms (26).

7. Plug-type connector according to one of Claims 1 to 6, **characterized in that** the two securing elements (12) are embodied so as to be identical and in particular as single-piece moulded parts in each case.

8. Plug-type connector according to Claim 6 or 7, **characterized in that** the two latching arms (26) of each securing element (12) are arranged offset with respect to one another in parallel in the direction which is perpendicular to the plane of movement of said securing element (12).

9. Plug-type connector according to one of Claims 1 to 8, **characterized in that** the coupling parts (2, 4) are composed of plastic and/or metal.

10. Plug-type connector according to one of Claims 1 to 9, **characterized in that** the cage element (20) has an essentially right parallelepiped-shaped external contour with, in particular, a square outline, the securing elements (12) engaging in the manner of a draw in opposite side openings, and wherein the securing elements (12) each have, on their side pointing radially outwards, an activation section (32) with a pressure face (34) which is parallel to the plane of the respective side opening of the cage element (20).

11. Plug-type connector according to Claim 10, **characterized in that** in the locking position the pressure faces (34) of the securing elements (12) end approximately flush up with the level of the side openings of the cage element (20).

## Revendications

1. Raccord enfichable pour tuyaux pour fluide, composé de deux parties de couplage, et notamment d'une partie de manchon (2) et d'une partie de fiche (4), sachant que la partie de fiche (4) peut être enfichée de manière étanche dans une ouverture réceptrice (8) de la partie de manchon (2) à l'aide d'une tige de fiche (6) et peut être bloquée de manière amovible à l'état enfiché par l'intermédiaire d'un dispositif de verrouillage (10), sachant que le dispositif de verrouillage (10) présente deux éléments d'arrêt (12) présentant en coupe une forme de C et une pièce d'arrêt les arrêtant, sachant que les éléments d'arrêt (12) saisissent de manière axiale et radiale, sur les côtés diamétralement opposés, deux entretoises annulaires (14, 16) extérieures, radiales, en forme de bride, connexes à l'état enfiché, de deux pièces de couplage (2, 4) pour les bloquer, **caractérisé en ce que** la pièce d'arrêt est configurée comme un élément en cage (20) dans lequel les éléments d'arrêt (12) sont maintenus et guidés de manière imperdable de sorte qu'ils peuvent être déplacés en direction radiale dans l'élément en cage (20), entre une position de prémontage et une position de blocage.

2. Raccord enfichable selon la revendication 1, **caractérisé en ce que** les éléments d'arrêt (12) sont configurés en forme de secteur de cercle de manière à saisir les entretoises annulaires (14, 16) des pièces de couplage (2, 4) dans la direction périmétrique, par l'intermédiaire respectivement d'un angle de préhension (□) compris entre 45° environ et 180° maximum et notamment entre 100° environ et 140°.

3. Raccord enfichable selon la revendication 1 ou 2, **caractérisé en ce que** l'élément en cage (20) est relié ou peut être relié de manière prémontée aux éléments d'arrêt (12) et à une des deux pièces de couplage (2 ou 4) de sorte que la pièce de couplage (2 ou 4) respective peut être enfichée, dans la position de prémontage des éléments d'arrêt (12), à la respectivement autre pièce de couplage (4 ou 2) et que les éléments de couplage (2, 4) peuvent ensuite être bloqués pour éviter de se détacher lors du passage des éléments d'arrêt (12) dans leur position de blocage.

4. Raccord enfichable selon la revendication 3, **caractérisé en ce que** l'élément en cage (20) présente deux ouvertures d'enfichage (22) opposées dans la direction d'enfichage des pièces de couplage (2, 4) et notamment que des moyens de fixation sont disposés de telle sorte, au niveau de la roue périphérique intérieure d'au moins une de ces ouvertures d'enfichage (22), de préférence sous la forme de saillies (24) radiales, que l'élément en cage (20) peut être amené de manière encliquetable dans la position de prémontage avec l'ouverture d'enfichage (22) respective, par l'intermédiaire de l'entretoise annulaire (14, 16) de la pièce de couplage (2, 4) respective.

5. Raccord enfichable selon l'une quelconque des revendications 1 à 4, **caractérisé en ce que** les éléments d'arrêt (12) sont respectivement fixés dans la position de prémontage et dans la position de blocage par rapport à l'élément en cage (20), notamment par l'intermédiaire de moyens à cran d'arrêt.

6. Raccord enfichable selon la revendication 5, **caractérisé en ce que** chaque élément d'arrêt (12) présente de préférence deux bras à cran d'arrêt (26) sur ressort, lesquels interagissent avec des évidements à cran d'arrêt (28a, 28b) de l'élément en cage (20) définissant d'une part la position de prémontage et d'autre part la position de blocage, sachant que des moyens de fixation sont prévus au niveau du bras à cran d'arrêt (26) pour relier en position de prémontage le dispositif de verrouillage (10) à une des pièces de couplage (2 ou 4).

7. Raccord enfichable selon l'une quelconque des revendications 1 à 6, **caractérisé en ce que** les deux éléments d'arrêt (12) sont configurés de manière identique et notamment comme des pièces moulées en une seule pièce, respectivement.

8. Raccord enfichable selon la revendication 6 ou 7, **caractérisé en ce que** les deux bras à cran d'arrêt (26) de chaque éléments d'arrêt (12) sont disposés de manière décalée et parallèle l'un par rapport à l'autre dans la direction perpendiculaire au plan de leur mouvement.

9. Raccord enfichable selon l'une quelconque des revendications 1 à 8, **caractérisé en ce que** les pièces de couplage (2, 4) sont en plastique et/ou en métal.

10. Raccord enfichable selon l'une quelconque des revendications 1 à 9, **caractérisé en ce que** l'élément en cage (20) présente un contour extérieur essentiellement carré, la forme de sa surface de base étant notamment carrée, sachant que les éléments d'arrêt (12) entrent en prise comme des tiroirs dans les ouvertures latérales opposées et sachant que les éléments d'arrêt (12) présentent respectivement sur leurs faces radialement orientées vers l'extérieur un segment d'actionnement (32) avec une surface de pression (34) parallèle au plan de l'ouverture latérale respective de l'élément en cage (20).

11. Raccord enfichable selon la revendication 10, **caractérisé en ce que** dans la position de blocage, les éléments d'arrêt (12) isolent de manière affleurée à l'aide de leurs surfaces de pression (34), dans le plan des ouvertures latérales des élément en cage (20).
